(19)

Europäisches
Patentamt
European
Patent Office
Office européen
des brevets

(11) **EP 2 658 265 B1**

(12) **EUROPEAN PATENT SPECIFICATION**

(45) Date of publication and mention
of the grant of the patent:
**20.08.2014 Bulletin 2014/34**

(51) Int Cl.:
***H04N 13/00*** (2006.01)

(21) Application number: **12165333.1**

(22) Date of filing: **24.04.2012**

(54) **Adaptive depth offset calculation for an image**

Adaptive Tiefenausgleichsberechnung für ein Bild

Calcul de décalage de profondeur adaptatif pour une image

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.10.2013 Bulletin 2013/44**

(73) Proprietor: **Vestel Elektronik Sanayi ve Ticaret A.S.
45030 Manisa (TR)**

(72) Inventors:
• **Bastug, Ahmet
45030 Manisa (TR)**

• **Ozer, Nuri
45030 Manisa (TR)**

(74) Representative: **Cayli, Hülya
Paragon Consultancy Inc.
Koza Sokak No: 63/2
GOP
06540 Ankara (TR)**

(56) References cited:
**US-A1- 2005 089 212     US-A1- 2008 150 945**

**Description**

**Technical Field**

The present invention is related to methods and systems for processing a depth map of an image.

**Prior Art**

For image processing applications, extracting precise perspective characteristics of an image is an important issue. One of the most important characteristics for an image is the depth of the image, which practically defines the distance of the objects to the point of view. The more precise the depth map of the image is, the more realistic the perspective perception of the image becomes.

Depth characteristic of an image has become much more important with the development of 3 dimensional displays, which creates a 3 dimensional image perception. Therefore; a true depth map of an image is needed to reflect the original perception of the image.

Several widely known approaches are used to obtain a depth map of an image. These methods generally extract depth information by identifying objects in the image and obtaining their saliencies with respect to the others. Finally, a depth map is obtained which is based on relative positions and/or saliencies of the objects within the image.

However, the relative depth map extraction cannot exactly define perspective characteristics of the image since overall image may also have a varying depth. For instance, if an image sequence (a movie), which is obtained by zooming into a steady object, is shown on a 3 dimensional display by analyzing a known depth map extraction method, the zooming effect will rather be perceived as magnifying effect. Therefore; original movement of the scene will be affected by inadequate processing. Therefore; an overall depth should also be extracted and should be used for reconstructing the image. The overall image depth, which is known as depth offset, defines the perspective position of the overall image, and said depth is an important concept in the image processing especially for 3 dimensional, stereoscopic and/or multi-view displays.

Several methods are known from the prior art related to depth offset extraction. The patent document US 2011/0317766 A1 discloses a depth coding method which comprises depth offset extraction based on existing depth values. The method of US 2011/0317766 A1 extracts an overall depth offset based on calculated or obtained depth values. However the method is inadequate for extracting an overall depth offset for an image.

Another patent document US 2011/0157160 A1 discloses a 3 dimensional image generating method in which a depth offset allocation is realized in accordance with existing depth differences of the image and allowable depth values. Within the method of US 2011/0157160 A1, depth offset is obtained in accordance with minimum maximum depth values of the image and allowable depth value range. However, the method of the document does not specify a method for properly adjusting depth offset within the allowable range.

**Brief Description of the Invention**

Present invention comprises a system and method for adaptive depth offset calculation for an image, in which the edge map of the image is analyzed in order to count number of high frequency points values of which are higher than a predetermined threshold and count number of low frequency points values of which are lower than a predetermined threshold. The number of high and low frequency points are compared to the predetermined boundaries to classify the image, and a depth offset is calculated in accordance with said classification. The invention provides a precise depth adjustment for an image in order to obtain a true perspective perception.

Embodiments of the invention provide successful approaches for calculating precise depth offset for an image and adjusting the whole depth of the image in accordance with said depth offset.

With the system and method of the present invention, an adaptive depth offset calculation is achieved in order to obtain true perspective perception of the whole image, which increases viewer comfort.

**Object of the Invention**

The main object of the invention is to provide an adaptive depth offset calculation system and method for an image.

Another object of the invention is to provide an adaptive depth offset calculation system and method which extracts overall depth of an image.

Another object of the invention is to provide a robust adaptive depth offset calculation system and method for an image.

Another object of the invention is to provide an adaptive depth offset calculation system and method which provides smooth depth changes for a sequence of images.

## Description of Drawings

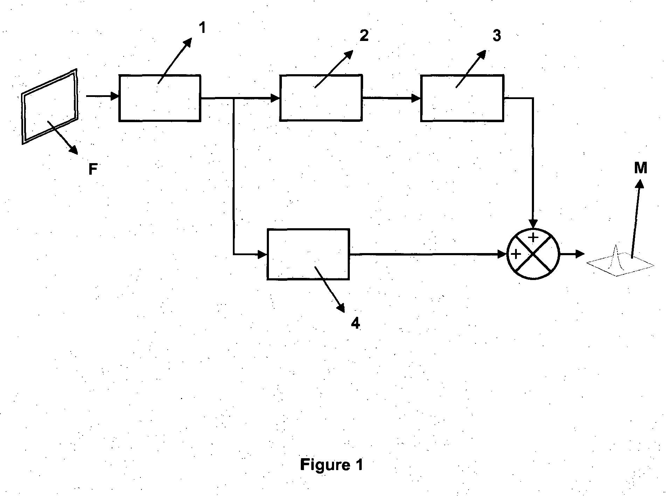

**Figure 1** shows an embodiment of the adaptive depth offset calculation system of the present invention.
The references in the figures may posses following meanings;

| | |
|---|---|
| Image | (F) |
| Depth map | (M) |
| Edge map means | (1) |
| Classification means | (2) |
| Depth offset calculation means | (3) |
| Depth map means | (4) |

## Detailed Description of the Invention

Depth offset ($D_F$) is an important parameter in especially 3 dimensional image processing. Depth offset ($D_F$) defines the overall perspective position of the image (F) including all elements of the image (F).
The present invention provides a novel method and system for adaptive depth offset ($D_F$) calculation for an image (F). With the method and system of the invention, the depth map of the image (F) can be modified so as to create original perspective perception of a scene with an image ($D_F$).
The systems of the prior art, which are capable of acquisition or extraction (estimation) of a depth map of an image (F), comprises a depth map means (4), which either reads a depth information embedded within a data of an image (F) or extracts a depth map using an edge map created (estimated) by an edge map means (2). If the depth map is extracted using said edge map, it is very likely that a relative depth map is created and depth offset ($D_F$) cannot be acquired.
An exemplary embodiment of the system of the invention is given in figure 1. The system may comprise at least one edge map means (1) for either acquisition or extraction of an edge map of the image (F). The edge map means (1) may calculate edge map of the image (F) using any method known from the prior art such as Canny detector or Sobel operator. Alternatively the system of the invention may utilize a readily acquired edge map, data of which may be comprised within the image (F). The edge map of the image (F) may be created at the same resolution with the image (F). Preferably, the edge map is created by dividing the image (F) into non-overlapping blocks and mapping each block of the image (F) to a point of the edge map. Block-wise calculation significantly reduces computational complexity and is also useful for system and method of the invention.
The system of the invention comprises at least one classification means (2), which inputs the edge map of the image (F) and analyzes the edge map in order to classify the image (F) in accordance with edge map characteristics. The classification means (2) comprises preferably two distinct map thresholds, namely high edge threshold ($E_{HIGH}$) and low edge threshold ($E_{LOW}$). The classification means (2) counts the points of the edge map which have a value higher than high edge threshold ($E_{HIGH}$). Said number of points is defined as a number of high frequency points ($N_{HIGH}$). The classification means (2) also counts the points of the edge map which have a value lower than the low edge threshold ($E_{LOW}$) and said number of points is defined as a number of low frequency points ($N_{LOW}$). The number of high frequency points ($N_{HIGH}$) and the number of low frequency points ($N_{LOW}$) are used to classify the image (F) and calculate a depth offset ($D_F$) accordingly.
In order to classify the image (F), preferably two predetermined boundaries, a high boundary ($T_{HIGH}$) and a low boundary ($T_{LOW}$) are used. The classification means (2) classifies the image (F) by comparing the number of high frequency points ($N_{HIGH}$) to high boundary ($T_{HIGH}$) and comparing the number of low frequency points ($N_{LOW}$) to low boundary ($T_{LOW}$). Preferably, the classification is done as follows;

- If the number of high frequency points ($N_{HIGH}$) is higher than high boundary ($T_{HIGH}$), the image (F) is classified as "high frequency".
- If the number of low frequency points ($N_{LOW}$) is higher than low boundary ($T_{LOW}$), the image is classified as "low frequency".
- If both the number of high frequency points ($N_{HIGH}$) is higher than high boundary ($T_{HIGH}$) and the number of low frequency points ($N_{LOW}$) is higher than low boundary ($T_{LOW}$), the image is classified as "both high and low frequency".
- If both the number of high frequency points ($N_{HIGH}$) is lower than high boundary ($T_{HIGH}$) and the number of low frequency points ($N_{LOW}$) is lower than low boundary ($T_{LOW}$), the image is classified as "neither high nor low frequency".

The classification means (2) therefore determines the offset calculation relation by counting the number of namely points of the edge map which are outside a nominal range limited by high edge threshold ($E_{HIGH}$) and low edge threshold ($E_{LOW}$).

The system of the invention further comprises a depth offset calculation means (3), which calculates a depth offset ($D_F$) in accordance with the classification of the image (F), which is performed by classification means (2), and in relation to the number of high frequency points ($N_{HIGH}$). The depth offset calculation means (3) may use different relations in accordance with said classification of the image (F) to obtain different ranges of depth offset ($D_F$) for images (F) with different characteristics.

A successful embodiment of a depth offset calculation means (3) is developed within the present invention in accordance with classification embodiment, classifying the image (F) as "high frequency", "low frequency", "both high and low frequency" or "neither high nor low frequency".

If an image (F) is classified as "high frequency", the depth offset ($D_F$) is calculated using the equation (1)

$$D_F = C_H x(N_{HIGH} - T_{HIGH}) \qquad\qquad (1)$$

In the equation (1) $C_H$ is a depth offset coefficient, which varies the impact of number of high frequency points.

If the image is classified as "low frequency", the depth offset ($D_F$) is additionally reduced by a first low frequency offset ($L_1$), and depth offset is calculated as in the equation (2).

$$D_F = C_H x(N_{HIGH} - T_{HIGH}) - L_1 \qquad\qquad (2)$$

If the image (F) is classified as "both high and low frequency", the depth offset ($D_F$) is reduced by a second low frequency offset ($L_2$), which is smaller than the first low frequency offset ($L_1$) as a logical design choice. The depth offset ($D_F$) of "both high and low frequency" image (F) is calculated using the equation (3).

$$D_F = C_H x(N_{HIGH} - T_{HIGH}) - L_2 \qquad\qquad (3)$$

If the image (F) is classified as "neither high nor low frequency", depth offset ($D_F$) is defined as zero.

If the system is arranged to successively compute depth offset ($D_F$) for a sequence of images (F), the depth offset ($D_F$) may have successive values which may have large differences. This fact will disturb user comfort since it will create depth jumps. Therefore, preferably a smoothing method and smoothing means (not shown in figures) can be used to smooth successive depth offsets ($D_F$). For instance, an IIR filter, which weighs a calculated depth offset ($D_F$) with a previously calculated depth offset ($D_{FP}$) of a previous image ($F_P$) to calculate a weighted depth offset ($D_W$), can be used as in the equation (4).

$$D_W = (\alpha x D_F) + ((1 - \alpha) X D_{PF}) \qquad\qquad (4)$$

In the equation (4), $\alpha$ is the weighing parameter, which is chosen from a range of 0 to 1. The filter reduces the differences between successive calculated depth offsets ($D_F$), resulting in smooth depth transitions.

Furthermore, to further smooth depth transitions, a means for step sized adaptation (not shown in figures) can be used to reach a final depth offset ($D_{FF}$) by adding predetermined steps to a final depth offset ($D_{PF}$) of a previous image ($F_P$), using the equation (5).

$$D_{FF} = D_{PF} + \mu x sign(D_W - D_{PF}) \qquad\qquad (5)$$

In the equation (5), sign defines the standard mathematical sign function and $\mu$ defines step size.

Consequently, the depth offset calculation method of the present invention mainly comprises the steps of;

- Determining a number of high frequency points ($N_{HIGH}$) by counting the number of points of edge map which have a value higher than a predetermined high edge threshold ($E_{HIGH}$)
- Determining a number of low frequency points ($N_{LOW}$) by counting number of points of edge map which have a value lower than a predetermined low edge threshold ($E_{LOW}$)
- Classifying the image by comparing the number of high frequency points ($N_{HIGH}$) to a predetermined high boundary ($T_{HIGH}$) and comparing the number of low frequency points ($N_{LOW}$) to a predetermined low boundary ($T_{LOW}$)
- Calculating a depth offset ($D_F$) in accordance with said classification and in relation to the number of high frequency points ($N_{HIGH}$) and/or number of low frequency points ($N_{LOW}$)

The method of the invention may further comprise obtaining a weighted depth offset ($D_w$) by weighing calculated depth offset ($D_F$) with a depth offset ($D_{FP}$) of a previous image ($F_P$). Furthermore, the method may further comprise the step of step sized adaptation to obtain a final depth offset ($D_{FF}$) by adding predetermined steps to a final depth offset ($D_{PF}$) of a previous image ($F_P$).

With the system and method of the present invention, an adaptive depth offset ($D_F$) can be calculated to update the depth map of the image (F), and a realistic depth perception is ensured by obtaining exact depth of a whole image (F).

## Claims

1. An adaptive depth offset calculation system for an image (F) **characterized in that** it comprises;

    - a classification means (2) which inputs an edge map of the image (F); which defines a number of high frequency points ($N_{HIGH}$) by counting points of the edge map which have a value higher than a predetermined high edge threshold ($E_{HIGH}$); which defines number of low frequency points ($N_{LOW}$) by counting points of the edge map which have a value lower than a predetermined low edge threshold ($E_{LOW}$); and which classifies the image (F) by comparing the number of high frequency points ($N_{HIGH}$) with a predetermined high boundary ($T_{HIGH}$) and by comparing the number of low frequency points ($N_{LOW}$) with a predetermined low boundary ($T_{LOW}$), and
    - a depth offset calculation means (3), which calculates a depth offset ($D_F$) in accordance with said classification of the image (F), which is performed by said classification means (2), and in relation to the number of high frequency points ($N_{HIGH}$), wherein the depth offset ($D_F$) defines the overall image depth.

2. Adaptive depth offset calculation system according to claim 1 wherein;

    - if said number of high frequency points ($N_{HIGH}$) is higher than said high boundary ($T_{HIGH}$), said classification means (2) classifies the image (F) as "high frequency"
    - if said number of low frequency points ($N_{LOW}$) is higher than low boundary ($T_{LOW}$), said classification means (2) classifies the image (F) as "low frequency
    - if both said number of high frequency points ($N_{HIGH}$) is higher than said high boundary ($T_{HIGH}$) and said number of low frequency points ($N_{LOW}$) is higher than said low boundary ($T_{LOW}$), said classification means (2) classifies the image (F) as "both high and low frequency"
    - if both said number of high frequency points ($N_{HIGH}$) is lower than said high boundary ($T_{HIGH}$) and said number of low frequency points ($N_{LOW}$) is lower than low boundary ($T_{LOW}$), said classification means (2) classifies the image (F) as "neither high nor low frequency"

3. Adaptive depth offset calculation system according to claim 2 wherein

    - if the image is classified as "high frequency", said depth offset calculation means (3) calculates the depth offset ($D_F$) using the equation (1)

$$D_F = C_H x (N_{HIGH} - T_{HIGH}) \qquad\qquad (1)$$

    - if the image is classified as "low frequency", said depth offset calculation means (3) calculates the depth offset ($D_F$) using the equation (2)

$$D_F = C_H x(N_{HIGH} - T_{HIGH}) - L_1 \qquad (2)$$

- if the image is classified as "both high and low frequency", said depth offset calculation means (3) calculates the depth offset ($D_F$) using the equation (3)

$$D_F = C_H x(N_{HIGH} - T_{HIGH}) - L_2 \qquad (3)$$

wherein $C_H$ is a depth offset coefficient, $L_1$ is a first low frequency offset and $L_2$ is a second low frequency offset.

4. Adaptive depth offset calculation system according to claim 1 wherein said system further comprises smoothing means which weighs a calculated depth offset ($D_F$) with a previously calculated depth offset ($D_{FP}$) of a previous image ($F_P$) to calculate a weighted depth offset ($D_W$)

5. Adaptive depth offset calculation system according to claim 4 wherein said weighing is performed using equation (4)

$$D_W = (\alpha x D_F) + ((1-\alpha) X D_{PF}) \qquad (4)$$

wherein $\alpha$ is the weighing parameter.

6. Adaptive depth offset calculation system according to claim 1 wherein said system further comprises means for step sized adaptation to reach a final depth offset ($D_{FF}$) by adding predetermined steps to a final depth offset ($D_{PF}$) of a previous image ($F_P$), using the equation (5)

$$D_{FF} = D_{PF} + \mu x sign(D_W - D_{PF}) \qquad (5)$$

wherein sign defines the standard mathematical sign function, and $\mu$ defines step size.

7. An adaptive depth offset calculation method for an image (F) **characterized in that** it comprises the steps of;

   - inputting an edge map of the image (F)
   - defining a number of high frequency points ($N_{HIGH}$) by counting points of the edge map which have a value higher than a predetermined high edge threshold ($E_{HIGH}$);
   - defining number of low frequency points ($N_{LOW}$) by counting points of the edge map which have a value lower than a predetermined low edge threshold ($E_{LOW}$);
   - classifying the image (F) by comparing the number of high frequency points ($N_{HIGH}$) with a predetermined high boundary ($T_{HIGH}$) and by comparing the number of low frequency points ($N_{LOW}$) with a predetermined low boundary ($T_{LOW}$)
   - calculating a depth offset in accordance with said classification of the image (F) and in relation to the number of high frequency points ($N_{HIGH}$), wherein the depth offset ($D_F$) defines the overall image depth.

8. Adaptive depth offset calculation method according to claim 7 wherein

   - the image (F) is classified as "high frequency" if said number of high frequency points ($N_{HIGH}$) is higher than said high boundary ($T_{HIGH}$).
   - the image (F) is classified as "low frequency" if said number of low frequency points ($N_{LOW}$) is higher than low boundary ($T_{LOW}$).
   - the image (F) is classified as "both high and low frequency" if both said number of high frequency points ($N_{HIGH}$) is higher than said high boundary ($T_{HIGH}$) and said number of low frequency points ($N_{LOW}$) is higher than said low boundary ($T_{LOW}$).

- the image (F) is classified as "neither high nor low frequency" if both said number of high frequency points ($N_{HIGH}$) is lower than said high boundary ($T_{HIGH}$) and said number of low frequency points ($N_{LOW}$) is lower than low boundary ($T_{LOW}$).

9. Adaptive depth offset calculation method according to claim 8 wherein

- if the image is classified as "high frequency", the depth offset is calculated the depth offset ($D_F$) using the equation (1)

$$D_F = C_H x (N_{HIGH} - T_{HIGH}) \qquad (1)$$

- if the image is classified as "low frequency" said depth offset ($D_F$) is calculated using the equation (2)

$$D_F = C_H x (N_{HIGH} - T_{HIGH}) - L_1 \qquad (2)$$

- if the image is classified as "both high and low frequency", the depth offset ($D_F$) is calculated using the equation (3)

$$D_F = C_H x (N_{HIGH} - T_{HIGH}) - L_2 \qquad (3)$$

wherein $C_H$ is a depth offset coefficient, $L_1$ is a first low frequency offset and $L_2$ is a second low frequency offset.

10. Adaptive depth offset calculation method according to claim 7 **characterized in that** said method further comprises the step of weighing a calculated depth offset ($D_F$) with a previously calculated depth offset ($D_{FP}$) of a previous image ($F_P$) to calculate a weighted depth offset ($D_W$).

11. Adaptive depth offset calculation method according to claim 10 wherein said weighing is performed using equation (4)

$$D_W = (\alpha x D_F) + ((1 - \alpha) X D_{PF}) \qquad (4)$$

wherein $\alpha$ is the weighing parameter.

12. Adaptive depth offset calculation method according to claim 8 **characterized in that** said method further comprises the step of step sized adaptation to reach a final depth offset ($D_{FF}$) by adding predetermined steps to a final depth offset ($D_{PF}$) of a previous image ($F_P$), using the equation (5)

$$D_{FF} = D_{PF} + \mu x sign(D_W - D_{PF}) \qquad (5)$$

wherein sign defines the standard mathematical sign function, and $\mu$ defines step size.

**Patentansprüche**

1. System für eine adaptive Tiefenoffsetberechnung für ein Bild (F), **dadurch gekennzeichnet, dass** es umfasst

- eine Klassifikationseinrichtung (2), welche eine Kantenkarte oder -bild (edge map) des Bildes (F) erhält oder eingibt; welches eine Anzahl der Hochfrequenz-Punkte ($N_{HIGH}$) durch Zählen der Punkte der Kantenkarte/bild definiert, welche einen Wert haben, der größer ist als ein vorgegebener hoher Kanten-Schwellenwert ($E_{HIGH}$); welches die Anzahl der Niederfrequenz-Punkte ($N_{LOW}$) durch Zählen durch Punkte der Kantenkarte/bild definiert, welche einen geringeren Wert haben als ein vorbestimmter unterer Kanten-Schwellenwert ($E_{LOW}$); und welches das Bild (F) klassifiziert, und zwar durch Vergleichen der Anzahl der Hoch-Frequenzpunkte ($N_{HIGH}$) mit einer vorbestimmten hohen Grenze ($T_{HIGH}$) und durch Vergleichen der Anzahl der Nieder-Frequenzpunkte ($N_{LOW}$), und zwar mit einer vorbestimmten unteren Grenze ($T_{LOW}$); und
- eine Tiefenoffset-Kalkulationseinrichtung (3), welche angepasst ist, den Tiefenoffset ($D_F$) in Übereinstimmung mit der Klassifizierung des Bildes (F) zu berechnen oder zu bestimmen, welches durch die Klassifikationseinrichtung (2) ausgeführt wird und in Relation zu der Anzahl der Hochfrequenz-Punkte ($N_{HIGH}$), wobei der Tiefenoffset ($D_F$) die gesamte Bildtiefe definiert oder bestimmt.

2. System nach Anspruch 1, wobei

- wenn die Anzahl der Hochfrequenz-Punkte ($N_{HIGH}$) größer ist als die hohe Grenze ($T_{HIGH}$), die Klassifikationseinrichtung (2) das Bild (F) als "hochfrequent" klassifiziert;
- wenn die Anzahl der Niederfrequenz-Punkte ($N_{LOW}$) größer ist als die untere Grenze ($T_{LOW}$), die Klassifikationseinrichtung (2) das Bild (F) als "niederfrequent" klassifiziert;
- wenn die Anzahl der Hochfrequenz-Punkte ($N_{HIGH}$) größer ist als die obere Grenze ($T_{HIGH}$) und die Anzahl der Nieder-Frequenz-Punkte ($N_{LOW}$) höher ist als die untere Grenze ($T_{LOW}$), die Klassifikationseinrichtung (2) das Bild (F) als "sowohl hochfrequent als auch niederfrequent" klassifiziert;
- wenn die Anzahl der Hochfrequenz-Punkte ($N_{HIGH}$) größer ist als die obere Grenze ($T_{HIGH}$) und die Anzahl der Niederfrequenz-Punkte ($N_{LOW}$) geringer ist als die untere Grenze ($T_{LOW}$), die Klassifikationseinrichtung (2) das Bild (F) als "weder hochfrequent noch niederfrequent" klassifiziert.

3. System nach Anspruch 2, wobei

- wenn das Bild als "hochfrequent" klassifiziert ist, die Einrichtung (3) zur Tiefenoffset-Berechnung den Tiefenoffset ($D_F$) unter Verwendung der folgenden Formel (1) berechnet

$$D_F = C_H x (N_{HIGH} - T_{HIGH}) \qquad (1)$$

- wenn das Bild als "niederfrequent" klassifiziert ist, die Einrichtung (3) zur Tiefenoffset-Berechnung den Tiefenoffset ($D_F$) unter Verwendung der Gleichung (2) wie folgt berechnet

$$D_F = C_H x (N_{HIGH} - T_{HIGH}) - L_1 \qquad (2)$$

- wenn das Bild als "sowohl hochfrequent als auch niederfrequent" klassifiziert ist, die Berechnungseinrichtung (3) für den Tiefenoffset den Tiefenoffset ($D_F$) berechnet unter Verwendung der Gleichung (3), wie folgt

$$D_F = C_H x (N_{HIGH} - T_{HIGH}) - L_2 \qquad (3),$$

wobei $C_H$ ein Tiefenoffset-Koeffizient ist, $L_1$ ein erster unterer Frequenzoffset ist und $L_2$ ein zweiter unterer Frequenzoffset ist.

4. System nach Anspruch 1, wobei das System weiter eine Glättungseinrichtung beinhaltet, welche einen berechneten Tiefenoffset ($D_F$) gewichtet, und zwar mit einem zuvor berechneten Tiefenoffset ($D_{FP}$) eines vorhergehenden Bildes ($F_P$) zur Berechnung eines gewichteten Tiefenoffsets ($D_W$).

5. System nach Anspruch 4, wobei die Gewichtung unter Verwendung der folgenden Formel oder Gleichung (4) ausgeführt wird

$$D_W = (\alpha x\, D_F) + ((1-\alpha) X\, D_{PF}) \tag{4},$$

wobei $\alpha$ der Gewichtungsparameter ist.

6. System nach Anspruch 1, wobei das System weiter eine Einrichtung beinhaltet, zur schrittweise bestimmten oder veränderten Adaption zur Erreichung eines finalen Tiefenoffsets ($D_{FF}$) durch Addieren vorbestimmter Schritte zu einem endgültigen Tiefenoffset ($D_{PF}$) eines vorhergehenden Bildes ($F_P$), unter Verwendung der Gleichung (5)

$$D_{FF} = D_{PF} + \mu x sign(D_W - D_{PF}) \tag{5},$$

wobei das Vorzeichen die standard-mathematische Vorzeichenfunktion ist und $\mu$ die Schrittgröße definiert.

7. Verfahren einer adaptiven Tiefenoffsetberechnung für ein Bild (F), **dadurch gekennzeichnet, dass** es die folgenden Schritte oder Funktionen aufweist;

    - Eingeben oder Einspeisen einer Kantenkarte/bild (edge map) des Bildes (F);
    - Definieren einer Anzahl der Hochfrequenz-Punkte ($N_{HIGH}$), durch Zählen der Punkte der Kantenkarte, welche einen höheren Wert haben als ein vorbestimmter hoher Schwellenwert ($E_{HIGH}$);
    - Bestimmen einer Anzahl von Niederfrequenz-Punkten ($N_{LOW}$), durch Zählen der Punkte der Kantenkarte, welche einen geringeren Wert als ein vorbestimmter unterer Kanten-Schwellenwert ($E_{LOW}$) besitzen;
    - Klassifizieren des Bildes (F) durch Vergleichen der Anzahl der Hochfrequenz-Punkte ($N_{HIGH}$) mit einer vorbestimmten hohen Grenze ($T_{HICH}$) und Vergleichen der Anzahl von Niederfrequenz-Punkten ($N_{LOW}$) mit einer vorbestimmten unteren Grenze ($T_{LOW}$);
    - Berechnen eines Tiefenoffsets in Übereinstimmung mit der Klassifikation des Bildes (F) und in Bezug oder unter Berücksichtigung der Anzahl der Hochfrequenz-Punkte ($N_{HIGH}$), wobei der Tiefenoffset ($D_F$) die Bildtiefe insgesamt oder die gesamte Bildtiefe bestimmt.

8. Verfahren nach Anspruch 7, wobei

    - das Bild (F) als "hochfrequent" klassifiziert wird, wenn die Anzahl der Hochfrequenz-Punkte ($N_{HIGH}$) größer oder höher ist als die obere Grenze ($T_{HIGH}$),
    - das Bild (F) als "niederfrequent" klassifiziert wird, wenn die Anzahl der Niederfrequenz-Punkte ($N_{LOW}$) höher oder größer ist als die untere Grenze ($T_{LOW}$),
    - das Bild (F) als "sowohl hochfrequent als auch niederfrequent" klassifiziert wird, wenn die Anzahl der Hochfrequenz-Punkte ($N_{HIGH}$) größer ist als die obere Grenze ($T_{HIGH}$) und die Anzahl der Niederfrequenz-Punkte ($N_{LOW}$) höher oder größer ist als die untere Grenze ($T_{LOW}$),
    - das Bild (F) als "weder hochfrequent noch niederfrequent" klassifiziert wird, wenn sowohl die Anzahl der Hochfrequenz-Punkte ($N_{HIGH}$) größer ist als die obere Grenze ($T_{HIGH}$) und die Anzahl der Niederfrequenz-Punkte ($N_{LOW}$) geringer als die untere Grenze ($T_{LOW}$).

9. Verfahren nach Anspruch 8, wobei

    - wenn das Bild als "hochfrequent" klassifiziert ist, der Tiefenoffset berechnet wird als der Tiefenoffset ($D_F$) unter Verwendung der folgenden Formel (1)

$$D_F = C_H x (N_{HIGH} - T_{HIGH}) \tag{1}$$

    - wenn das Bild als "niederfrequent" klassifiziert ist, der Tiefenoffset ($D_F$) durch Verwenden der Gleichung (2) berechnet wird

$$D_F = C_H x (N_{HIGH} - T_{HIGH}) - L_1 \qquad (2)$$

- wenn das Bild als "sowohl hochfrequent als auch niederfrequent" klassifiziert ist, der Tiefenoffset ($D_F$) unter Verwendung der Gleichung (3) berechnet wird, wie folgt

$$D_F = C_H x (N_{HIGH} - T_{HIGH}) - L_2 \qquad (3)$$

wobei $C_H$ ein Tiefenoffset-Koeffizient ist, $L_1$ ein erster unterer Frequenzoffset ist und $L_2$ ein zweiter unterer Frequenzoffset ist.

10. Verfahren nach Anspruch 7, **dadurch gekennzeichnet, dass** das Verfahren weiter den Schritt des Gewichtens beinhaltet, wobei das Gewichten einen berechneten Tiefenoffset ($D_F$) gegenüber einem vorher berechneten Tiefenoffset ($D_{FP}$) eines vorhergehenden Bildes ($F_P$) gewichtet, zur Berechnung eines gewichteten Tiefenoffsets (Dw).

11. Verfahren nach Anspruch 10, wobei das Gewichten durch Ausführen oder Benutzen der folgenden Formel (4) erfolgt

$$D_W = (\alpha x D_F) + ((1 - \alpha) X D_{PF}) \qquad (4),$$

wobei $\alpha$ der Gewichtungsparameter ist.

12. Verfahren nach Anspruch 8, **dadurch gekennzeichnet, dass** das Verfahren den Schritt der gestuften Anpassung oder gestuften Adaption enthält, um einen endgültigen Tiefenoffset ($D_{FF}$) zu erhalten oder zu erreichen, durch Addition von vorbestimmten Stufen oder Schritten zu einem endgültigen Tiefenoffset ($D_{PF}$) eines vorhergehenden Bildes ($F_P$) unter Verwendung der folgenden Gleichung (5)

$$D_{FF} = D_{PF} + \mu x sign(D_W - D_{PF}) \qquad (5),$$

wobei das Vorzeichen die mathematische Standardfunktion für das Vorzeichen beinhaltet und $\mu$ die Schrittgröße oder Stufengröße bestimmt.

## Revendications

1. Système de calcul de décalage de profondeur adaptatif pour une image (F), **caractérisé en ce qu'**il comprend :

   - un moyen de classement (2) qui fournit en entrée une carte de contour de l'image (F) ; qui définit un nombre de points haute fréquence ($N_{HIGH}$) en comptant les points de la carte de contour qui ont une valeur supérieure à un seuil de contour maximal prédéterminé ($E_{HIGH}$) ; qui définit un nombre de points basse fréquence (slow) en comptant les points sur la carte de contour qui ont une valeur inférieure à un seuil de contour minimal prédéterminé ($E_{LOW}$) ; et qui classe l'image (F) en comparant le nombre de points haute fréquence ($N_{HIGH}$) à une limite maximale prédéterminée ($T_{HIGH}$) et en comparant le nombre de points basse fréquence ($N_{LOW}$) à une limite minimale prédéterminée ($T_{LOW}$), et
   - un moyen de calcul de décalage de profondeur (3) qui calcule un décalage de profondeur ($D_F$) en conformité avec ledit classement de l'image (F), qui est réalisé par ledit moyen de classement (2) et en relation avec le nombre de points haute fréquence ($N_{HIGH}$), dans lequel le décalage de profondeur ($D_F$) définit la profondeur d'image d'ensemble.

2. Système de calcul de décalage de profondeur adaptatif selon la revendication 1, dans lequel :

   - si ledit nombre de points haute fréquence ($N_{HIGH}$) est supérieur à ladite limite maximale ($T_{HIGH}$), ledit moyen de classement (2) classe l'image (F) comme « haute fréquence »

- si ledit nombre de points basse fréquence ($N_{LOW}$) est supérieur à la limite minimale ($T_{LOW}$), ledit moyen de classement (2) classe l'image (F) comme « basse fréquence »

- si à la fois ledit nombre de points haute fréquence ($N_{HIGH}$) est supérieur à ladite limite maximale ($T_{HIGH}$) et ledit nombre de points basse fréquence ($N_{LOW}$) est supérieur à ladite limite minimale ($T_{LOW}$), ledit moyen de classement (2) classe l'image (F) comme « à la fois haute et basse fréquence »

- si à la fois ledit nombre de points haute fréquence ($N_{HIGH}$) est inférieur à ladite limite maximale ($TH_{IGH}$) et ledit nombre de points basse fréquence ($N_{LOW}$) est inférieur à ladite limite minimale ($T_{LOW}$), ledit moyen de classement (2) classe l'image (F) comme « ni haute ni basse fréquence »

3. Système de calcul de décalage de profondeur adaptatif selon la revendication 2, dans lequel

- si l'image est classée comme « haute fréquence », ledit moyen de calcul de décalage de profondeur (3) calcule le décalage de profondeur ($D_F$) en utilisant l'équation (1)

$$D_F = C_H x(N_{HIGH} - T_{HIGH}) \qquad (1)$$

- si l'image est classée comme « basse fréquence », ledit moyen de calcul de décalage de profondeur (3) calcule le décalage de profondeur ($D_F$) en utilisant l'équation (2)

$$D_F = C_H x(N_{HIGH} - T_{HIGH}) - L_1 \qquad (2)$$

- si l'image est classée comme « à la fois haute et basse fréquence », ledit moyen de calcul de décalage de profondeur (3) calcule le décalage de profondeur ($D_F$) en utilisant l'équation (3)

$$D_F = C_H x(N_{HIGH} - T_{HIGH}) - L_2 \qquad (3)$$

où $C_H$ est un coefficient de décalage de profondeur, $L_1$ est un premier décalage basse fréquence et $L_2$ est un second décalage basse fréquence.

4. Système de calcul de décalage de profondeur adaptatif selon la revendication 1, dans lequel ledit système comprend en outre un moyen de lissage qui pondère un décalage de profondeur calculé ($D_F$) avec un décalage de profondeur précédemment calculé ($D_{FP}$) d'une image précédente ($F_P$) afin de calculer un décalage de profondeur pondéré ($D_W$).

5. Système de calcul de décalage de profondeur adaptatif selon la revendication 4, dans lequel ladite pondération est réalisée en utilisant l'équation (4)

$$D_W = (\alpha x D_F) + ((1-\alpha) X D_{PF}) \qquad (4)$$

dans lequel $\alpha$ est le paramètre de pondération.

6. Système de calcul de décalage de profondeur adaptatif selon la revendication 1, dans lequel ledit système comprend en outre un moyen d'adaptation de taille par étapes pour atteindre un décalage de profondeur final ($D_{FF}$) en ajoutant des étapes prédéterminées à un décalage de profondeur final ($D_{PF}$) d'une image précédente ($F_P$), en utilisant l'équation (5)

$$D_{FF} = D_{PF} + \mu x sign(D_w - D_{PF}) \qquad (5)$$

où sign définit la fonction de signe mathématique type, et $\mu$ définit la taille d'étape.

7. Procédé de calcul de décalage de profondeur adaptatif pour une image (F), **caractérisé en ce qu'**il comprend les étapes de :

- entrée d'une carte de contour de l'image (F)
- définition d'un nombre de points haute fréquence ($N_{HIGH}$) en comptant les points de la carte de contour qui ont une valeur supérieure à un seuil de contour maximal prédéterminé ($E_{HIGH}$) ;
- définition du nombre de points basse fréquence ($N_{LOW}$) en comptant les points de la carte de contour qui ont une valeur inférieure à un seuil de contour minimal prédéterminé ($E_{LOW}$);
- classement de l'image (F) en comparant le nombre de points haute fréquence ($N_{HIGH}$) à une limite maximale prédéterminée ($T_{HIGH}$) et en comparant le nombre de points basse fréquence ($N_{LOW}$) à une limite minimale prédéterminée ($T_{LOW}$)
- calcul d'un décalage de profondeur en conformité avec ledit classement de l'image (F) et en relation avec le nombre de points haute fréquence ($N_{HIGH}$), dans lequel le décalage de profondeur ($D_F$) définit la profondeur d'image d'ensemble.

8. Procédé de calcul de décalage de profondeur adaptatif selon la revendication 7, dans lequel

- l'image (F) est classée comme « haute fréquence » si ledit nombre de points haute fréquence ($N_{HIGH}$) est supérieur à ladite limite maximale ($T_{HIGH}$),
- l'image (F) est classée comme « basse fréquence » si ledit nombre de points basse fréquence ($N_{LOW}$) est supérieur à la limite minimale ($T_{LOW}$),
- l'image (F) est classée comme « à la fois haute et basse fréquence » si à la fois ledit nombre de points haute fréquence ($N_{HIGH}$) est supérieur à ladite limite maximale ($T_{HIGH}$) et ledit nombre de points basse fréquence ($N_{LOW}$) est supérieur à ladite limite minimale ($T_{LOW}$),
- l'image (F) est classée comme « ni haute ni basse fréquence » si à la fois ledit nombre de points haute fréquence ($N_{HIGH}$) est inférieur à ladite limite maximale ($T_{HIGH}$) et ledit nombre de points basse fréquence ($N_{LOW}$) est inférieur à limite minimale ($T_{LOW}$).

9. Procédé de calcul de décalage de profondeur adaptatif selon la revendication 8, dans lequel

- si l'image est classée comme « haute fréquence », le décalage de profondeur ($D_F$) est calculé en utilisant l'équation (1)

$$D_F = C_H x (N_{HIGH} - T_{HIGH}) \qquad (1)$$

- si l'image est classée comme « basse fréquence », ledit décalage de profondeur ($D_F$) est calculé en utilisant l'équation (2)

$$D_F = C_H x (N_{HIGH} - T_{HIGH}) - L_1 \qquad (2)$$

- si l'image est classée comme « à la fois haute et basse fréquence », le décalage de profondeur ($D_F$) est calculé en utilisant l'équation (3)

$$D_F = C_H x (N_{HIGH} - T_{HIGH}) - L_2 \qquad (3)$$

où $C_H$ est un coefficient de décalage de profondeur, $L_1$ est un premier décalage basse fréquence et $L_2$ est un second décalage basse fréquence.

10. Procédé de calcul de décalage de profondeur adaptatif selon la revendication 7, **caractérisé en ce que** ledit procédé comprend en outre l'étape de pondération d'un décalage de profondeur calculé ($D_F$) avec un décalage de profondeur précédemment calculé ($D_{FP}$) d'une image précédente ($F_P$) afin de calculer un décalage de profondeur pondéré ($D_W$).

11. Procédé de calcul de décalage de profondeur adaptatif selon la revendication 10, dans lequel ladite pondération est réalisée en utilisant l'équation (4)

$$D_W = (\alpha x\, D_F) + ((1-\alpha) X\, D_{PF}) \tag{4}$$

où a est le paramètre de pondération.

12. Procédé de calcul de décalage de profondeur adaptatif selon la revendication 8, **caractérisé en ce que** ledit procédé comprend en outre l'étape d'adaptation de taille par étape afin d'atteindre un décalage de profondeur final ($D_{FF}$) en ajoutant des étapes prédéterminées à un décalage de profondeur final ($D_{PF}$) d'une image précédente ($F_P$), en utilisant l'équation (5)

$$D_{FF} = D_{PF} + \mu x sign(D_W - D_{PF}) \tag{5}$$

où sign définit la fonction de signe mathématique type, et $\mu$ définit la taille d'étape.

**Figure 1**

**EP 2 658 265 B1**

**Patent documents cited in the description**

- US 20110317766 A1
- US 20110157160 A1